# EUROPÄISCHE PATENTSCHRIFT

(11) **EP 1 560 722 B1**
(45) Veröffentlichungstag und Bekanntmachung des Hinweises auf die Patenterteilung: **30.05.2007**
(21) Anmeldenummer: 03750463.6
(22) Anmeldetag: 29.08.2003
(51) Int. Cl.: B60H 1/00

(54) **BELÜFTUNGSANLAGE MIT EINEM VERDAMPFER MIT SPEICHERFUNKTION FÜR EIN KRAFTFAHRZEUG**
VENTILATING DEVICE FOR A MOTOR VEHICLE COMPRISING AN EVAPORATOR WITH ACCUMULATING FUNCTION
DISPOSITIF D'AERATION POUR UN VEHICULE AUTOMOBLIE COMPRENANT UN EVAPORATEUR PRESENTANT UNE FONCTION D'ACCUMULATION

(30) Priorität: 31.10.2002 DE 10251166
(43) Veröffentlichungstag der Anmeldung: 10.08.2005
(73) Patentinhaber: Behr GmbH & Co. KG, 70469 Stuttgart (DE)
(72) Erfinder: DIEKSANDER, Wolfgang, 70794 Filderstadt (DE); KOUKOURAVAS, Evripidis, 72654 Neckartenzlingen (DE)
(74) Vertreter: Grauel, Andreas
(86) Internationale Anmeldenummer: PCT/EP2003/009585
(87) Internationale Veröffentlichungsnummer: WO 2004/039615

(56) Entgegenhaltungen:
- EP-A- 0 995 621
- DE-A- 3 514 359
- DE-A- 10 156 944
- US-A- 5 186 237
- US-A- 5 975 422

## Beschreibung

Die Erfindung betrifft eine Belüftungsanlage mit einem Verdampfer mit Speicherfunktion und einer Vorrichtung zur Regelung der Luftzufuhr, zu dem Verdampfer eines Kraftfahrzeuges, gemäß dem Oberbegriff des Anspruchs 1.

Bei bekannten Belüftungsanlagen erfolgt die Regelung der Luftzuströmung von einem Filter zu einem Verdampfer, insbesondere einem Speicherverdampfer, teilweise mittels Rollbändern oder Jalousien. Derartige Vorrichtungen zur Regelung bieten zwar teilweise Vorteile, insbesondere in Hinblick auf Geräusche, jedoch sind sie relativ teuer und häufig ist nicht ausreichend Bauraum vor dem Verdampfer vorhanden.

DE-A-101 56 944 zeigt eine Belüftungsanlage gemäß dem Oberbegriff des Anspruchs 1.

Es ist Aufgabe der Erfindung, eine verbesserte Belüftungsanlage zur Verfügung zu stellen.

Diese Aufgabe wird gelöst durch eine Belüftungsanlage mit den Merkmalen des Anspruchs 1. Vorteilhafte Ausgestaltungen sind Gegenstand der Unteransprüche.

Erfindungsgemäß ist die Vorrichtung zur Regelung der Luftzufuhr der Belüftungsanlage ausgestaltet, dass der die Luft leitende Kanal drei voneinander durch in Längsrichtung verlaufende Wände getrennte Kanalzweige aufweist, welche mittels zweier miteinander zusammenwirkender Klappen verschließbar sind. Hierbei bleibt mindestens ein Kanalzweig unverschlossen. Hierbei sind vorzugsweise drei verschiedene Kühlfasen vorgesehen: maximaler Kühlbetrieb, Normal-Kühlbetrieb und Speicher-Kühlbetrieb. Hierbei wird im Normal-Kühlbetrieb der Kältespeicher geladen und im Speicher-Kühlbetrieb, d.h. bei einem Motorstop, entladen.

Die Klappen sind vorzugsweise an dem vorderen Ende der Wände angeordnet.

Vorzugsweise verschließen die beiden Klappen im Normal-Kühlbetrieb den mittleren Kanalzweig, wobei die Klappen bevorzugt aneinander, in Längsrichtung gesehen, vor dem mittleren Kanalzweig anliegen und miteinander einen spitzen Winkel bilden. Eine derartige Ausgestaltung verbessert den Strömungsverlauf und bewirkt eine verbesserte Luftzufuhr zu den beiden anderen Kanalzweigen. Dadurch, dass der mittlere Kanalzweig verschlossen ist, kann der sich hieran anschließende Kältespeicher geladen werden.

Vorzugsweise sind die beiden Klappen im maximalen Kühlbetrieb derart ausgerichtet, dass sie die jeweilige Wand verlängern, so dass wiederum eine optimale Luftströmung vorliegt und der Strömungswiderstand minimiert wird. Dies ermöglicht eine optimale Ausnutzung der gesamten Kälteleistung des Verdampfers.

Vorzugsweise sind die beiden Klappen im Motorstop-Betrieb oder Speicher-Kühlbetrieb derart ausgerichtet, dass sie die äußeren Kanalzweige verschließen, wobei sie vorzugsweise in einem Winkel von 90° +/- 10° zu den entsprechenden Wänden angeordnet sind. Ferner erfolgt im Speicher-Kühlbetrieb eine Reduzierung der Gebläseleistung, so dass der Luftdurchsatz verringert wird.

Im Folgenden wird die Erfindung anhand eines Ausführungsbeispiels unter Bezugnahme auf die Zeichnung im Einzelnen erläutert. In der Zeichnung zeigen:
- Fig. 1: einen Schnitt durch eine erfindungsgemäße Belüftungsanlage im Normal-Kühlbetrieb,
- Fig. 2: einen Schnitt durch die Belüftungsanlage von Fig. 1 im maximalen Kühlbetrieb, und
- Fig. 3: einen Schnitt durch die Belüftungsanlange von Fig. 1 im Speicher-Kühlbetrieb.

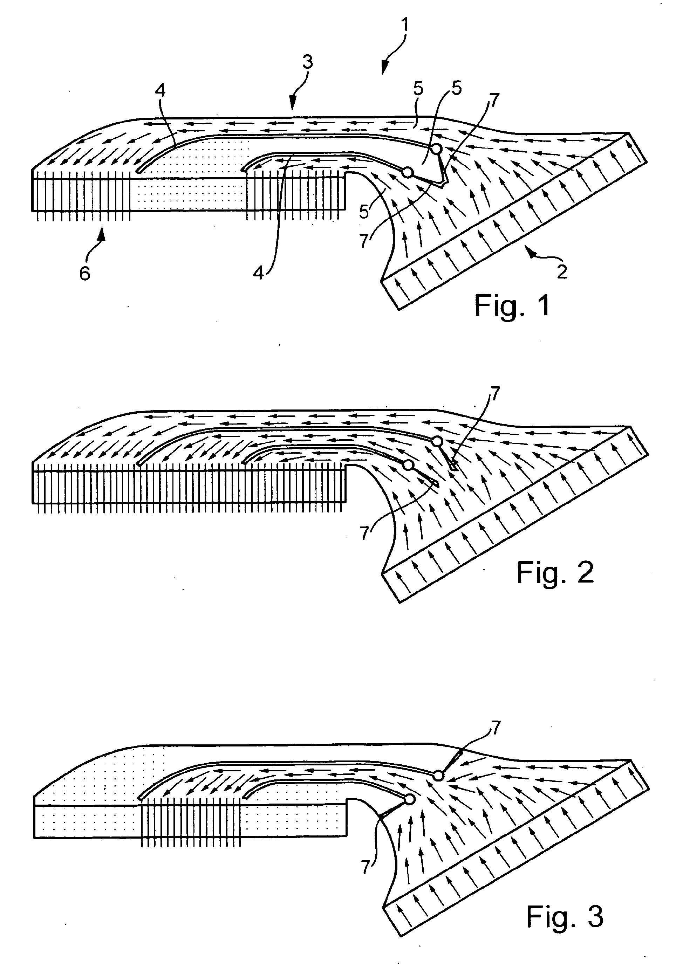

Die Fig. 1 bis 3 zeigen eine Belüftungsanlage mit einer Vorrichtung 1 zur Regelung der Luftzufuhr, welche die von einem Filter 2 kommende Luft durch einen Kanal 3 mit drei voneinander durch in Längsrichtung verlaufende Wände 4 getrennten Kanalzweigen 5 zu einem Verdampfer 6 eines Kraftfahrzeuges leitet. Dabei ist der Strömungsverlauf durch eine Vielzahl kleiner Pfeile angedeutet. Beim Verdampfer 6 handelt es sich um einen Verdampfer mit einem Kältespeicher, welcher in einem mittleren Bereich des Verdampfers 6 angeordnet ist.

Die Regelung erfolgt mittels zweier Klappen 7, die schwenkbar am, in Luftströmungsrichtung gesehen, vorderen Ende der Wände 4 angebracht sind. Diese beiden Klappen 7 sind im in Fig. 1 dargestellten Normal-Kühlbetrieb in einer Stellung, die den mittleren Kanalzweig 5 vollständig verschließt. Zur Optimierung der Luftströmung bilden hierbei die beiden Klappen 7 eine Art Spitze, so dass die Luft direkt in die anderen beiden Kanalzweige 5 geleitet wird, an deren Ende sie dann zum Verdampfer 6 gelangt, so dass der mittlere Bereich des Verdampfers 6 nicht von der Luft durchströmt wird und der sich in diesem Bereich des Verdampfers 6 befindliche Kältespeicher geladen werden kann.

In der Stellung "maximal Kühlen", die in Fig. 2 dargestellt ist, werden die Klappen 7 geöffnet, d.h. sie werden in eine Position gebracht, in der sie die jeweilige Wand 4 verlängern, so dass sie wiederum einen verbesserten Strömungsverlauf der Luft ermöglichen. Die Luft wird dann in diesem maximalen Kühlbetrieb über alle drei Kanalzweige 5 dem Verdampfer 6 großflächig zugeführt.

Im Falle eines Motorstops (Speicherbetrieb), bei dem eine - im Vergleich zum Normal-Kühlbetrieb - reduzierte Luft-Durchströmung des Verdampfers 6 gewünscht ist, werden die beiden Klappen 7 nach außen geklappt, so dass die beiden äußeren Kanalzweige 5 verschlossen sind und die gesamte Luft durch den mittleren Kanalzweig 5 strömt und somit auch nur den hieran anschließenden, mittleren Bereich des Verdampfers 6, d.h. den Kältespeicher, durchströmt. Ferner wird im Speicherbetrieb der Luftdurchsatz reduziert, beispielsweise durch Absenken der Gebläsespannung.

### Bezugszeichenliste

- 1: Vorrichtung
- 2: Filter
- 3: Kanal
- 4: Wand
- 5: Kanalzweig
- 6: Verdampfer
- 7: Klappe

## Patentansprüche

1. Belüftungsanlage mit einem Verdampfer (6) mit Speicherfunktion, einem Kanal (3) und einer Vorrichtung zur Regelung der Luftzufuhr, welche die Luftzufuhr, kommend von einem Filter (2) durch den Kanal (3) zum Verdampfer (6) mit Speicherfunktion eines Kraftfahrzeuges regelt, **dadurch gekennzeichnet, dass** der Kanal (3) zwei Klappen (7) und drei, voneinander durch in Längsrichtung verlaufende Wände (4) getrennte, Kanalzweige (5) aufweist.

2. Belüftungsanlage nach Anspruch 1, **dadurch gekennzeichnet, dass** die Klappen (7), in Längsrichtung gesehen, am Anfang der Wände (4) angeordnet sind.

3. Belüftungsanlage nach einem der Ansprüche 1 bis 2, **dadurch gekennzeichnet, dass** die Klappen (7) im Normalbetrieb derart ausgerichtet sind, dass sie den mittleren Kanalzweig (5) verschließen.

4. Belüftungsanlage nach Anspruch 3, **dadurch gekennzeichnet, dass** die Klappen (7) aneinander, in Längsrichtung gesehen, vor dem mittleren Kanalzweig (5) anliegen und miteinander einen spitzen Winkel bilden.

5. Belüftungsanlage nach einem der Ansprüche 2 bis 4, **dadurch gekennzeichnet, dass** die Klappen (7) im maximalen Kühlbetrieb derart ausgerichtet sind, dass sie die jeweilige Wand (4) verlängern.

6. Belüftungsanlage nach einem der Ansprüche 2 bis 5, **dadurch gekennzeichnet, dass** die Klappen (7) im Motorstop-Betrieb derart ausgerichtet sind, dass sie die äußeren Kanalzweige (5) verschließen.

7. Belüftungsanlage nach Anspruch 6, **dadurch gekennzeichnet, dass** die Klappen (7) in einem Winkel von 90° +/- 10° zu den entsprechenden Wänden (4) angeordnet sind.

8. Belüftungsanlage nach einem der Ansprüche 2 bis 7, **dadurch gekennzeichnet, dass** die zwei Klappen (7) derart steuerbar sind, dass sie in Abhängigkeit von ihrer Stellung drei unterschiedliche Arten von Kühlbetrieb zur Verfügung stellen.

## Claims

1. A ventilating device with an evaporator (6) with accumulating function, a duct (3) and a device for regulating the air supply which regulates the air supply coming from a filter (2) through the duct (3) to the evaporator (6) with accumulating function of a motor vehicle,
**characterised in that**
the duct (3) has two flaps (7) and three duct branches (5) which are separated from one another by longitudinally running walls(4).

2. A ventilating device in accordance with claim 1,
**characterised in that**
when viewed longitudinally the flaps (7) are positioned at the start of the walls (4).

3. A ventilating device in accordance with one of claims 1 or 2,
**characterised in that**
in normal operating mode the flaps (7) are oriented in such a manner that they close the central duct branch (5).

4. A ventilating device in accordance with claim 3,
**characterised in that**
when viewed longitudinally the flaps (7) are positioned adjacent to one another in front of the central duct branch (5) and together form an acute angle.

5. A ventilating device in accordance with one of claims 2 to 4,
**characterised in that**
in maximum cooling mode the flaps (7) are oriented in such a manner that they form extensions of their respective walls (4).

6. A ventilating device in accordance with one of claims 2 to 5,
**characterised in that**
in engine-off mode the flaps (7) are oriented in such a manner that they close the outer duct branches (5).

7. A ventilating device in accordance with claim 6,
**characterised in that**
the flaps (7) are positioned at an angle of 90° +/- 10° in relation to their respective walls (4).

8. A ventilating device in accordance with one of claims 2 to 7,
**characterised in that**
the two flaps (7) can be controlled in such a manner that they provide three different types of cooling mode dependent on their position.

## Revendications

1. Dispositif d'aération comprenant un évaporateur (6) avec fonction d'accumulateur, un canal (3) et un dispositif pour le réglage de l'arrivée d'air, qui règle l'arrivée d'air arrivant d'un filtre (2) par le canal (3) à l'évaporateur (6) avec fonction d'accumulateur d'un véhicule, **caractérisé en ce que** le canal (3) présente deux clapets (7) et trois branches de canal (5) séparées les unes des autres par des parois (4) agencées dans le sens longitudinal.

2. Dispositif d'aération selon la revendication 1, **caractérisé en ce que** les clapets (7) sont disposés, vus dans le sens de la longueur, au début des parois.

3. Dispositif d'aération selon l'une des revendications 1 à 2, **caractérisé en ce que** les clapets (7) sont orientés en fonctionnement normal de telle sorte qu'ils ferment la branche de canal (5) centrale.

4. Dispositif d'aération selon la revendication 3, **caractérisé en ce que** les clapets (7) s'appuient les uns sur les autres, vus dans le sens longitudinal, avant la branche de canal (5) centrale et forment entre eux un angle aigu.

5. Dispositif d'aération selon l'une quelconque des revendications 2 à 4, **caractérisé en ce que** les clapets (7) sont orientés en mode de refroidissement maximum de telle sorte qu'ils prolongent la paroi (4) concernée.

6. Dispositif d'aération selon l'une quelconque des revendications 2 à 5, **caractérisé en ce que** les clapets (7) sont orientés en mode arrêt du moteur de telle sorte qu'ils ferment les branches de canal (5) extérieures.

7. Dispositif d'aération selon la revendication 6, **caractérisé en ce que** les clapets (7) sont disposés en formant un angle de 90° +/- 10° par rapport aux parois (4) correspondantes.

8. Dispositif d'aération selon l'une quelconque des revendications 2 à 7, **caractérisé en ce que** les deux clapets (7) peuvent être commandés de telle sorte qu'ils mettent à disposition trois types définis de mode de refroidissement en fonction de leur position.
